# EUROPÄISCHE PATENTANMELDUNG

(11) **EP 2 161 479 A1**
(43) Veröffentlichungstag der Anmeldung: **10.03.2010**
(21) Anmeldenummer: 08105225.0
(22) Anmeldetag: 04.09.2008
(51) Int. Cl.: F16H 57/04

(54) **Getriebe mit Getriebegehäuse und Verfahren zur Beeinflussung der Getriebeöltemperatur**

(71) Anmelder: Ford Global Technologies, LLC, Dearborn, MI 48126 (US)
(72) Erfinder: Pingen, Bert, 53913, Swisttal (DE); Borrmann, Dirk, 50354, Huerth (DE); Mehring, Jan, 50668, Köln (DE); Tobergte, Michael, 50767, Köln (DE); Haupts, Volker, 52080, Aachen (DE)
(74) Vertreter: Drömer, Hans-Carsten

(57) **Zusammenfassung**

Ein Getriebe mit Getriebegehäuse (1), insbesondere für die Verwendung mit einer Brennkraftmaschine.
Des Weiteren betrifft die Erfindung ein Verfahren zur Beeinflussung der Getriebeöltemperatur eines mit einer Brennkraftmaschine zusammenwirkenden Getriebes der genannten Art.
Erreicht wird dies mit einem Getriebe der genannten Art, das dadurch gekennzeichnet ist, dass das Getriebegehäuse (1) mindestens einen Kühlmittelmantel (2) zur Beeinflussung der Getriebeöltemperatur als Bestandteil einer Flüssigkeitskühlung aufweist mit mindestens einem Kühlmittel durch das Getriebegehäuse (1) führenden Kühlmittelkanal (3), mindestens einer Zuführung (4) zur Versorgung des mindestens einen Kühlmittelmantels (2) mit Kühlmittel und mindestens einer Abführung (5) zum Abführen des Kühlmittels.

## Beschreibung

Die Erfindung betrifft ein Getriebe mit Getriebegehäuse, insbesondere für die Verwendung mit einer Brennkraftmaschine.

Des Weiteren betrifft die Erfindung ein Verfahren zur Beeinflussung der Getriebeöltemperatur eines mit einer Brennkraftmaschine zusammenwirkenden Getriebes der genannten Art.

Ein Getriebe der oben genannten Art wird beispielsweise in einem Kraftfahrzeug verwendet und ist zusammen mit der Brennkraftmaschine Teil des Antriebsstranges. Das Getriebe ist eine wichtige Komponente zur Übertragung der Leistung des Motors d. h. der Brennkraftmaschine hin zu den Rädern.

Bei der Auslegung des Getriebes werden neben einer ausreichenden Haltbarkeit und Zuverlässigkeit grundsätzlich ein geringes Bauteilvolumen und ein niedriges Gewicht angestrebt. Darüber hinaus soll - insbesondere zur Reduzierung des Kraftstoffverbrauchs - ein möglichst hoher Wirkungsgrad bei der Übertragung der Leistung bzw. des Drehmomentes realisiert werden. Zielführend ist dabei unter anderem die Verminderung der Reibung zwischen den und an den im Gehäuse gelagerten Getriebekomponenten. Hierzu sollte das Getriebeöl, welches im Getriebegehäuse zur Schmierung der Getriebewellen und Getriebezahnräder eingesetzt wird, eine bestimmte Mindesttemperatur aufweisen, damit die Viskosität des Öls einen hinsichtlich der Reibung vorteilhaften Wert annimmt. Andererseits sollte das Öl eine maximal zulässige Temperatur nicht übersteigen, da mit zunehmender Temperatur die Viskosität weiter abnimmt und sich das Reibverhalten wieder verschlechtert. Eine zu hohe Öltemperatur beschleunigt zudem die Alterung des Öls, wobei sich die Schmiereigenschaften des Öls verschlechtern.

Aus diesen Gründen werden verschiedene Maßnahmen zur Beeinflussung der Getriebeöltemperatur ergriffen bzw. vorgeschlagen.

Im Fahrzeugbau wird nach dem Stand der Technik beispielsweise vorgeschlagen, das Getriebegehäuse mit einer thermischen Isolierung zu versehen, um die Erwärmung des Getriebeöls nach einem Kaltstart der Brennkraftmaschine zu beschleunigen. Problematisch bei der Verwendung einer Isolierung ist aber, dass auch die Gefahr der Überschreitung einer maximal zulässigen Höchsttemperatur zunimmt, diese Temperaturüberschreitung deutlicher ausfällt und/oder häufiger auftritt. Die Isolierung dient naturgemäß der Beeinflussung der Getriebeöltemperatur hin zu höheren Temperaturen. Eine Kühlung des Getriebeöls ist mittels Isolierung prinzipbedingt nicht möglich bzw. wird durch diese sogar erschwert.

Ein anderer Lösungsansatz nach dem Stand der Technik sieht die Verwendung eines externen Wärmetauschers zur Beeinflussung der Getriebeöltemperatur vor. Die WO 2006/010430 A1 beschreibt eine Anordnung zur Kühlung des Getriebeöls, bei der der Kühlmittelkreislauf einer flüssigkeitsgekühlten Brennkraftmaschine und ein für die Kühlung des Getriebeöls ausgebildeter Kühlkreislauf via Wärmetauscher miteinander gekoppelt werden.

Dabei dient das Kühlmittel der Flüssigkeitskühlung der Brennkraftmaschine auch zur Kühlung des Getriebeöls. Hierzu wird ein Getriebeölkühler in den Wasserkasten des Kühlmittelkühlers integriert, was zur Ausbildung eines Wärmetauschers führt. Das den Wasserkasten durchströmende Kühlmittel der Brennkraftmaschine entzieht dabei dem Getriebeöl, welches den Getriebeölkühler durchströmt, Wärme, wodurch die Getriebeöltemperatur gesenkt wird.

Die in der WO 2006/010430 A1 beschriebene Anordnung zur Kühlung des Getriebeöls ist vergleichsweise aufwendig und kostenintensiv. Das Getriebeöl muß zur Kühlung zunächst dem Getriebegehäuse entnommen und nach der Temperaturabsenkung wieder dem Getriebe zugeführt werden.

Darüber hinaus hat die WO 2006/010430 A1 lediglich die Problematik einer Überhitzung des Getriebeöls zum Gegenstand. Eine gezielte Erwärmung des Getriebeöls ist nicht Teil der Aufgabe, die der WO 2006/010430 A1 zugrunde liegt.

Vor dem Hintergrund des oben Gesagten ist es die Aufgabe der vorliegenden Erfindung, ein Getriebe gemäß dem Oberbegriff des Anspruchs 1 bereitzustellen, bei dem auf die Getriebeöltemperatur Einfluß genommen werden kann, wobei insbesondere das Getriebeöl gezielt erwärmbar ist, um auf diese Weise schneller eine vorgegebene Mindesttemperatur zu erreichen.

Eine weitere Teilaufgabe der vorliegenden Erfindung ist es, ein Verfahren zur Beeinflussung der Getriebeöltemperatur eines mit einer Brennkraftmaschine zusammenwirkenden Getriebes der genannten Art aufzuzeigen.

Gelöst wird die erste Teilaufgabe durch ein Getriebe mit Getriebegehäuse, insbesondere für die Verwendung mit einer Brennkraftmaschine, das dadurch gekennzeichnet ist, dass das Getriebegehäuse mindestens einen Kühlmittelmantel zur Beeinflussung der Getriebeöltemperatur als Bestandteil einer Flüssigkeitskühlung aufweist mit mindestens einem Kühlmittel durch das Getriebegehäuse führenden Kühlmittelkanal, mindestens einer Zuführung zur Versorgung des mindestens einen Kühlmittelmantels mit Kühlmittel und mindestens einer Abführung zum Abführen des Kühlmittels.

Das erfindungsgemäße Getriebe ist mit einer Flüssigkeitskühlung ausgestattet. Ähnlich einer Flüssigkeitskühlung einer Brennkraftmaschine bzw. des Zylinderkopfes einer Brennkraftmaschine weist das Getriebegehäuse hierzu mindestens einen Kühlmittelmantel auf, der über mindestens einen Kühlmittelkanal verfügt. Der mindestens eine Kühlmittelkanal führt Kühlmittel, vorzugsweise mit Additiven versetztes Wasser, durch das Getriebe bzw. das Getriebegehäuse. Dabei wird im Inneren des Getriebes bzw. des Getriebegehäuses Wärme in das Getriebeöl eingetragen bzw. das Getriebeöl gekühlt und zwar in Abhängigkeit davon, ob das Kühlmittel eine höhere oder eine niedrigere Temperatur aufweist als das Getriebeöl bzw. die den Kühlmittelkanal begrenzenden Wandungen. In beiden Fällen ist vorliegend und grundsätzlich im Rahmen der Erfindung von einer Getriebeölkühlung bzw. Flüssigkeitskühlung die Rede.

Vorteilhaft an dem erfindungsgemäßen Getriebe ist insbesondere, dass das Getriebeöl dem Getriebegehäuse nicht entnommen werden muß, um außerhalb des Getriebes gekühlt bzw. erwärmt zu werden, wie dies beispielsweise in der WO 2006/010430 A1 vorgeschlagen und beschrieben wird. Damit besteht die Gefahr einer Ölleckage nicht. Die in der Regel vorhandene und gegen einen Ölaustritt abdichtende Ummantelung der geschmierten Getriebekomponenten muß nicht durchbrochen werden. Der Wärmeeintrag in das Öl bzw. der Wärmeentzug erfolgt durch Wärmeleitung und Konvektion, insbesondere über die das Öl begrenzenden und umgebenden Gehäusewandungen.

Das den mindestens einen Kühlmittelkanal durchströmende Kühlmittel kühlt bzw. erwärmt die den Kühlmittelkanal begrenzenden Wandungen, insbesondere das Kühlmittel und das Getriebeöl trennende Wandungen, aber auch indirekt durch Wärmeleitung benachbarte Getriebegehäuseteile d. h. -wandungen.

Im Hinblick auf die Tatsache, dass die Schmierung der Getriebekomponenten in der Regel mittels Spritzölschmierung erfolgt, erweist sich die erfindungsgemäße Getriebeölkühlung ebenfalls als vorteilhaft, da das Getriebeöl zur Kühlung bzw. Erwärmung erfindungsgemäß nicht unter Druck gesetzt werden muß bzw. gefördert zu werden braucht, so wie dies beispielweise bei der Getriebeölkühlung erforderlich ist, die in der WO 2006/010430 A1 beschrieben ist.

Das erfindungsgemäße mit einer Getriebeölkühlung ausgestattete Getriebe zeichnet sich des Weiteren durch eine kompakte Bauweise und ein vergleichsweise kleines Bauteilvolumen aus, was ein möglichst dichtes Packaging der gesamten Antriebseinheit ermöglicht.

Die Anzahl der Bauteile wird beispielsweise im Vergleich zu der in der WO 2006/010430 A1 beschriebenen Getriebeölkühlung verringert. Der Getriebeölkühler wird erfindungsgemäß in das Getriebegehäuse integriert, wobei der mindestens eine Kühlmittelmantel - beispielsweise bei einem gegossenen Gehäuse - durch Einbringen mindestens eines zusätzlichen Sandkerns schon bei der Herstellung des Gehäuserohlings mitberücksichtigt d. h. mitausgebildet werden kann. Dadurch, dass die Anzahl der Bauteile reduziert wird, können die Herstellungskosten und Montagekosten verringert werden.

Das Kühlmittel kann mit einer - zur Ausbildung eines Kühlkreislaufs - vorgesehenen Pumpe gefördert werden, so dass es in dem mindestens einen Kühlmittelmantel zirkuliert. Die vom Getriebeöl an das Kühlmittel abgegebene Wärme wird auf diese Weise aus dem Inneren des Getriebes abgeführt und dem Kühlmittel außerhalb des Getriebes wieder entzogen bzw. die vom Kühlmittel an das Getriebeöl abgegebene Wärme in das Innere des Getriebes eingebracht d. h. eingetragen.

Gemäß einer bevorzugten Ausführungsform kann der mindestens eine Kühlmittelmantel mit einer Flüssigkeitskühlung einer Brennkraftmaschine verbunden sein d. h. die Getriebeölkühlung mit einer Flüssigkeitskühlung der Brennkraftmaschine verbunden werden.

Dabei dient das Kühlmittel der Flüssigkeitskühlung der Brennkraftmaschine gleichzeitig als Kühlmittel für die Getriebeölkühlung. Das Kühlmittel wird dem Kühlkreislauf der Brennkraftmaschine entnommen und via Zuführung in den mindestens einen Kühlmittelmantel der Getriebeölkühlung d. h. des Getriebes eingeleitet, durchströmt den mindestens einen Kühlmittelkanal und verläßt das Getriebe bzw. den Kühlmittelmantel via Abführung. Das abgeführte Kühlmittel kann dann wieder in den Kühlkreislauf der Brennkraftmaschine eingespeist werden.

In Abhängigkeit von der Zielsetzung, nämlich einer Absenkung oder Erhöhung der Getriebeöltemperatur, kann das Kühlmittel dabei vor Eintritt in das Getriebe oder nach Durchlauf des Getriebes einen Wärmetauscher durchströmen oder einer anderweitigen Verwendung zugeführt werden.

Nach einem Kaltstart der Brennkraftmaschine sollen sowohl das Motorenöl als auch das Getriebeöl möglichst schnell ihre Betriebstemperatur bzw. eine Mindesttemperatur erreichen. Dabei ist an der in Rede stehenden Ausführungsform besonders vorteilhaft, dass sich das Kühlmittel der Brennkraftmaschine in der Regel schneller erhitzt als die beiden anderen Betriebsflüssigkeiten, nämlich das Motorenöl und das Getriebeöl, und daher im Rahmen der Warmlaufphase in vorteilhafter Weise zur Erwärmung des Getriebeöls genutzt werden kann.

Mit dem erfindungsgemäßen Getriebe wird die erste der Erfindung zugrunde liegende Aufgabe gelöst, nämlich ein Getriebe bereitzustellen, bei dem auf die Getriebeöltemperatur Einfluß genommen werden kann, wobei insbesondere das Getriebeöl gezielt erwärmbar ist, um schneller eine vorgegebene Mindesttemperatur zu erreichen.

Weitere vorteilhafte Ausführungsformen des Getriebes werden im Zusammenhang mit den Unteransprüchen erörtert.

Vorteilhaft sind Ausführungsformen des Getriebes, bei denen der mindestens eine Kühlmittelkanal mindestens eine Rippe aufweist, die in den Kühlmittelkanal hineinragt.

Zum einen erhöht die Anordnung einer Rippe die Oberfläche der Kanalinnenfläche, was den Wärmeübergang zwischen dem Kühlmittel und der Wandung des Kühlmittelkanals und damit zwischen den beiden Flüssigkeiten, nämlich dem Kühlmittel und dem Getriebeöl, unterstützt d. h. erhöht.

Zum anderen wird das durch den Kühlmittelkanal geführte Kühlmittel durch die mindestens eine in den Kühlmittelkanal hineinragende Rippe umgelenkt. Die auf die Rippe auftreffende Kühlmittelströmung hat eine Geschwindigkeitskomponente, die senkrecht auf der Rippe steht, wodurch der Wärmeübergang durch Konvektion zusätzlich erhöht wird.

Zudem wird durch das Vorsehen einer in den Kühlmittelkanal hineinragenden Rippe der dem Kühlmittel zur Verfügung stehende Kanalquerschnitt verkleinert, wodurch die Strömungsgeschwindigkeit des Kühlmittels und damit wiederum der Wärmeübergang erhöht wird.

Das Vorsehen von Rippen erhöht auch die mechanische Festigkeit des Gehäuses, die durch das Einbringen des Kühlmittelmantels in der Regel gemindert wird.

Bei geeigneter Anordnung mehrerer Rippen - beispielsweise abwechselnd auf zwei gegenüber liegenden Wandungen des Kanals - kann die Kühlmittelströmung mäanderförmig durch den Kühlmittelkanal geführt werden, wie im Rahmen der Figurenbeschreibung noch erörtert werden wird.

Aus den genannten Gründen sind auch insbesondere Ausführungsformen vorteilhaft, bei denen die mindestens eine Rippe quer zur Hauptströmungsrichtung des Kühlmittels ausgerichtet ist. Die Hauptströmungsrichtung folgt dabei in der Regel der Erstreckung des Kühlmittelkanals vom Eintritt des Kühlmittels in den Kanal bis hin zum Austritt des Kühlmittels aus dem Kanal.

Vorteilhaft sind Ausführungsformen, bei denen die mindestens eine Rippe an einer das Kühlmittel und das Getriebeöl trennenden Wandung des mindestens einen Kühlmittelkanals angeordnet ist. Dabei durchströmt auf der einen Seite der trennenden Wandung das Kühlmittel den Kühlmittelkanal, während sich auf der anderen Seite Getriebeöl befindet.

Die andere Seite der trennenden Wandung ist in der Regel vollständig mit Getriebeöl benetzt, auch wenn die Schmierung der Getriebekomponenten mittels Spritzölschmierung erfolgt und das ölseitige Gehäuseteilvolumen nicht vollständig mit Öl gefüllt ist. Die trennende Wandung stellt eine direkte Wärmebrücke zwischen den beiden Flüssigkeiten dar.

Vorteilhaft sind Ausführungsformen, bei denen an mindestens einer das Kühlmittel und das Getriebeöl trennenden Wandung des mindestens einen Kühlmittelkanals mindestens eine Rippe auf der dem Getriebeöl zugewandten Seite der trennenden Wandung angeordnet ist.

Bei dieser Ausführungsform ist ölseitig mindestens eine Rippe an der trennenden Wandung vorgesehen. Die Anordnung einer Rippe erhöht die Oberfläche der Wandung auf der dem Getriebeöl zugewandten Seite, was den Wärmeübergang zwischen dem Getriebeöl und der Wandung und damit zwischen den beiden Flüssigkeiten, nämlich dem Kühlmittel und dem Getriebeöl, unterstützt d. h. erhöht.

Zudem verfängt sich das mittels Spitzölschmierung eingebrachte und auch infolge der sich bewegenden Getriebekomponenten großräumig verteilte Öl an der mindestens einen hervorstehenden Rippe, wodurch gewissermaßen eine Versorgung d. h. ausreichende Benetzung der Wandung mit Öl erfolgt.

Vorteilhaft sind Ausführungsformen, bei denen der mindestens eine Kühlmittelkanal mindestens zwei Rippen aufweist, die in den Kühlmittelkanal hineinragen und auf gegenüberliegenden Seiten des mindestens einen Kühlmittelkanals angeordnet sind. Im Vergleich zu Ausführungsformen, bei denen nur auf einer Seite des Kühlmittelkanals Rippen vorgesehen sind, wird durch die beidseitige Anordnung von Rippen im Kühlmittelkanal die Oberfläche der Kanalinnenfläche weiter erhöht, was den Wärmeübergang zwischen dem Kühlmittel und den Wandungen des Kühlmittelkanals fördert.

Vorteilhaft sind in diesem Zusammenhang Ausführungsformen, bei denen die auf gegenüberliegenden Seiten des mindestens einen Kühlmittelkanals angeordneten Rippen versetzt zueinander angeordnet sind. Die versetzte Anordnung gestattet eine reißverschlußähnliche Verschachtelung der Rippen, bei der die freien Enden der Rippen einer Seite in die Rippen der anderen Seite hineinragen, wodurch die Rippen sich überlappen.

Dadurch ergibt sich die schon weiter oben erwähnte mäanderförmige Strömungsführung des Kühlmittels, die sich insbesondere durch die häufige Umlenkung der Kühlmittelströmung auszeichnet.

Aus den genannten Gründen und wie erwähnt sind Ausführungsformen vorteilhaft, bei denen die auf gegenüberliegenden Seiten des mindestens einen Kühlmittelkanals angeordneten und in den Kühlmittelkanal hineinragenden Rippen entlang des Kühlmittelkanals überlappend ausgebildet sind.

Die zweite der Erfindung zugrunde liegende Teilaufgabe, nämlich ein Verfahren zur Beeinflussung der Getriebeöltemperatur eines mit einer Brennkraftmaschine zusammenwirkenden Getriebes der genannten Art aufzuzeigen, wird gelöst durch ein Verfahren gemäß dem Oberbegriff des Anspruchs 10, bei dem der mindestens eine Kühlmittelmantel mit einer Flüssigkeitskühlung der Brennkraftmaschine verbunden wird und in der mindestens einen Zuführung ein Absperrelement zur Steuerung des Zuflusses an Kühlmittel vorgesehen wird, wobei das Absperrelement in Abhängigkeit von der Temperatur einer Betriebsflüssigkeit betätigt wird.

Das im Zusammenhang mit dem erfindungsgemäßen Getriebe Gesagte gilt ebenfalls für das erfindungsgemäße Verfahren. Dadurch, dass die Flüssigkeitskühlung der Brennkraftmaschine und die Getriebeölkühlung miteinander verbunden d. h. gekoppelt werden, ergibt sich eine Vielzahl von Synergien. Dasselbe Kühlmittel, welches den Kühlkreislauf der Brennkraftmaschine durchläuft und dem Zylinderkopf bzw. Zylinderblock Wärme entzieht, wird - beispielsweise - zur Erwärmung des Getriebeöls genutzt.

Vorliegend ist der im Zylinderkopf bzw. Zylinderblock integrierte Kühlmittelmantel mit dem mindestens einen Kühlmittelmantel des Getriebes verbunden, so dass die übrigen zur Ausbildung eines Kühlkreislaufes erforderlichen Bauteile und Aggregate grundsätzlich nur in einfacher Ausfertigung vorgesehen werden müssen und sowohl für den Kühlkreislauf der Brennkraftmaschine als auch für den des Getriebes verwendet werden können, was zu Synergien und Kosteneinsparungen führt, aber auch eine Gewichtsersparnis mit sich bringt.

So sind grundsätzlich nur eine Pumpe zur Förderung des Kühlmittels und ein Behältnis zur Bevorratung des Kühlmittels erforderlich. Die an das Kühlmittel abgegebene Wärme kann - falls überhaupt gewünscht - dem Kühlmittel in einem gemeinsamen Wärmetauscher wieder entzogen werden.

Das Absperrelement wird gemäß dem erfindungsgemäßen Verfahren in Abhängigkeit von der Temperatur einer Betriebsflüssigkeit betätigt. Im Folgenden werden Verfahrensvarianten vorgestellt, die sich bezüglich der Art der verwendeten Betriebsflüssigkeit unterscheiden.

Vorteilhaft sind Verfahrensvarianten, bei denen ein Sensor zur Erfassung der Getriebeöltemperatur vorgesehen wird und das Absperrelement in Abhängigkeit von der Temperatur des als Betriebsflüssigkeit dienenden Getriebeöls betätigt wird.

Vorliegend wird mittels Sensor gerade die Temperatur erfaßt und zur Steuerung des Absperrelements herangezogen, welche durch Steuerung der durch das Getriebegehäuse geführten Kühlmittelmenge beeinflußt werden soll, nämlich die Getriebeöltemperatur. Der Betriebszustand der Brennkraftmaschine wird dabei nicht berücksichtigt.

Während der Warmlaufphase kann das sich in der Brennkraftmaschine schneller erhitzende Kühlmittel bei geöffnetem Absperrelement genutzt werden, um das Getriebeöl schneller zu erwärmen. Dabei wird akzeptiert, dass sich die Brennkraftmaschine bzw. das Motorenöl weniger schnell erwärmt, da das Getriebeöl dem durch die Brennkraftmaschine geführten Kühlmittel immer wieder Wärme entzieht. Höhere Schadstoffemissionen können die Folge sein, welche aber grundsätzlich mittels Abgasnachbehandlung wieder vermindert bzw. kompensiert werden können.

Grundsätzlich besteht auch die Möglichkeit, das Getriebeöl zu kühlen, wozu das in das Getriebegehäuse eingeleitete Kühlmittel eine niedrigere Temperatur aufzuweisen hat als das Getriebeöl. Gegebenenfalls kann hierzu auf die Kühlmitteltemperatur vor der Zuführung in das Getriebegehäuse Einfluß genommen werden, beispielsweise mittels Wärmetauscher oder einer vorherigen anderweitigen Verwendung des Kühlmittels, bei der dem Kühlmittel Wärme entzogen wird.

Vorteilhaft sind auch Verfahrensvarianten, bei denen ein Sensor zur Erfassung der Motoröltemperatur vorgesehen wird und das Absperrelement in Abhängigkeit von der Temperatur des als Betriebsflüssigkeit dienenden Motorenöls betätigt wird.

Vorliegend wird - unabhängig von der momentan vorliegenden Getriebeöltemperatur - die Temperatur des Motorenöls d. h. der Brennkraftmaschine als maßgeblich angesehen. Auf diese Weise kann einer möglichst schnellen Erwärmung der Brennkraftmaschine auf Betriebstemperatur der Vorrang gegeben d. h. die höchste Priorität eingeräumt werden.

Diese Vorgehensweise verhindert, dass das sich in der Brennkraftmaschine erwärmende Kühlmittel nach einem Kaltstart ständig Wärme an das Getriebeöl abgibt und die Warmlaufphase der Brennkraftmaschine in unvorteilhafter Weise verlängert wird. Zu berücksichtigen ist dabei auch, dass gegebenenfalls vorgesehene Abgasnachbehandlungssysteme auf eine möglichst schnelle Erwärmung der Brennkraftmaschine angewiesen sind, um Schadstoffe konvertieren zu können.

Vorteilhaft sind ebenfalls Verfahrensvarianten, bei denen ein Sensor zur Erfassung der Motorkühlmitteltemperatur vorgesehen wird und das Absperrelement in Abhängigkeit von der Temperatur des als Betriebsflüssigkeit dienenden Motorkühlmittels betätigt wird.

Gemäß dieser Verfahrensvariante wäre eine Betätigung des Absperrelements beispielsweise in der Art vorteilhaft, dass das Absperrelement erst geöffnet und dem Getriebegehäuse erst dann Kühlmittel zur Erwärmung des Getriebeöls zugeführt wird, wenn das Kühlmittel infolge Erwärmung in der Brennkraftmaschine eine vorgebbare Mindesttemperatur erreicht bzw. überschritten hat.

Die vorstehend beschriebenen Verfahrensvarianten können auch miteinander kombiniert werden, insbesondere in der Art, dass in Abhängigkeit vom Betriebszustand der Brennkraftmaschine die Temperatur einer bestimmten Betriebsflüssigkeit als maßgeblich angesehen wird.

Das Kühlmittel kann für weitere Aufgaben verwendet werden, beispielsweise für die Innenraumheizung eines Kraftfahrzeuges. Ebenso kann die Betätigung des Absperrelementes von der Fahrzeuginnentemperatur abhängig gemacht werden und das Kühlmittel ausgehend von der Brennkraftmaschine zunächst zur Erwärmung bzw. Klimatisierung des Fahrgastraumes verwendet werden, bevor es dem Getriebegehäuse zugeführt wird.

Vorteilhaft sind insbesondere Verfahrensvarianten, bei denen das Absperrelement im Rahmen der Warmlaufphase der Brennkraftmaschine in der Art betätigt wird, dass das Kühlmittel zur Erwärmung des Getriebeöls genutzt wird.

Im Folgenden wird die Erfindung anhand der Figuren 1 bis 3 näher beschrieben. Hierbei zeigt:
- Fig. 1: schematisch in einer perspektivischen Darstellung das Gehäuse einer ersten Ausführungsform des Getriebes,
- Fig. 2: schematisch und im Querschnitt den Kühlmittelkanal gemäß einer zweiten Ausführungsform, und
- Fig. 3: schematisch und im Querschnitt den Kühlmittelkanal gemäß einer dritten Ausführungsform.

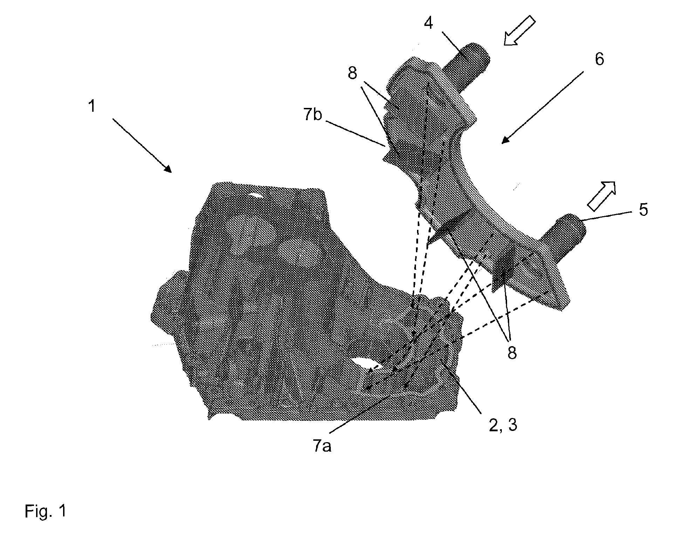

Figur 1 zeigt schematisch in einer perspektivischen Darstellung das Gehäuse 1 einer ersten Ausführungsform des Getriebes.

Das Getriebegehäuse 1 weist einen Kühlmittelmantel 2 als Bestandteil einer Flüssigkeitskühlung des Getriebes auf. Vorliegend ist der Kühlmittelmantel 2 als bogenförmig verlaufender Kühlmittelkanal 3 ausgebildet, durch den Kühlmittel durch das Getriebegehäuse 1 geführt wird, um die Getriebeöltemperatur zu beeinflussen.

Zur Ausbildung des Kühlmittelmantels 2 bzw. Kühlmittelkanals 3 wird ein Gehäusedeckel 6 montiert, wozu der Deckel 6 mit seiner Dichtfläche 7b auf die korrespondierende und den Kühlmittelmantel 2 umgebende Dichtfläche 7a gelegt und anschließend verschraubt wird. Die beiden jeweils zusammen gehörenden Bohrungen sind mit gestrichelten Linien verbunden.

Der Deckel 6 verfügt über eine Zuführung 4 zur Versorgung des Kühlmittelmantels 2 mit Kühlmittel und einer Abführung 5 zum Abführen des Kühlmittels. Darüber hinaus weist der Deckel 6 auf der der Zuführung 4 bzw. Abführung 5 abgewandten Seite vier fahnenförmige Rippen 8 auf, die im montierten Zustand in den Kühlmittelkanal 3 hineinragen, und den Wärmeübergang verbessern d. h. erhöhen.

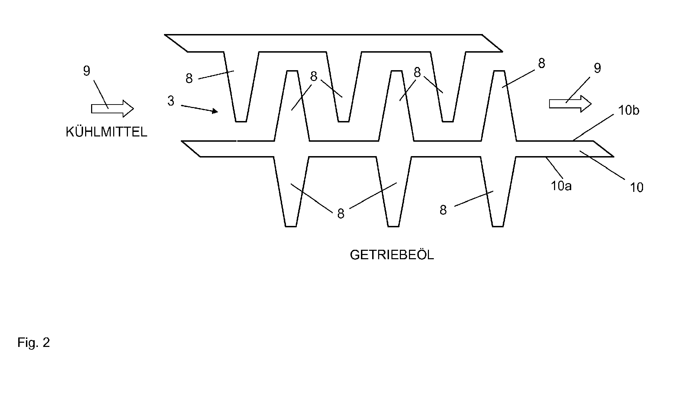

Figur 2 zeigt schematisch und im Querschnitt den Kühlmittelkanal 3 gemäß einer zweiten Ausführungsform.

Der Kühlmittelkanal 3 verfügt über mehrere Rippen 8, die in den Kühlmittelkanal 3 hineinragen und abwechselnd auf sich gegenüberliegenden Seiten des Kühlmittelkanals 3 angeordnet sind. Die Rippen 8 sind quer zur Hauptströmungsrichtung 9 des Kühlmittels ausgerichtet, wobei die Hauptströmungsrichtung 9 in Figur 2 mit zwei Pfeilen kenntlich gemacht ist und ersichtlich der Erstreckung d. h. der Längsachse des Kühlmittelkanals 3 entspricht bzw. folgt.

Die auf gegenüberliegenden Seiten des Kühlmittelkanals 3 angeordneten Rippen 8 sind versetzt zueinander angeordnet und entlang des Kühlmittelkanals 3 sich abwechselnd überlappend ausgebildet. Diese Anordnung bzw. Ausbildung der Rippen 8 führt zu einer reißverschlußähnlichen Verschachtelung der Rippen 8, bei der die freien Enden der Rippen 8 einer Seite in die Rippen 8 der anderen Seite hineinragen, so dass eine mäanderförmige Strömungsführung des Kühlmittels erzielt wird, bei der die Kühlmittelströmung häufig umgelenkt wird, was den Wärmeübergang fördert.

Ein Teil der in den Kühlmittelkanal 3 hineinragenden Rippen 8 ist an einer das Kühlmittel und das Getriebeöl trennenden Wandung 10 des Kühlmittelkanals 3 angeordnet. Auf der einen Seite 10b der trennenden Wandung 10 durchströmt das Kühlmittel den Kühlmittelkanal 3, wohingegen sich auf der anderen Seite 10a der Wandung 10 Getriebeöl befindet. Die trennende Wandung 10 dient als Wärmebrücke zwischen den beiden Flüssigkeiten.

Bei der in Figur 2 dargestellten Ausführungsform sind zusätzliche Rippen 8 an der das Kühlmittel und das Getriebeöl trennenden Wandung 10 vorgesehen, die auf der dem Getriebeöl zugewandten Seite 10a der trennenden Wandung 10 angeordnet sind.

Folglich sind bei der Ausführungsform gemäß Figur 2 mehrere Rippen 8 sowohl auf der getriebeölzugewandten Seite 10a der trennenden Wandung 10 als auch auf der kühlmittelzugewandten Seite 10b der trennenden Wandung 10 vorgesehen.

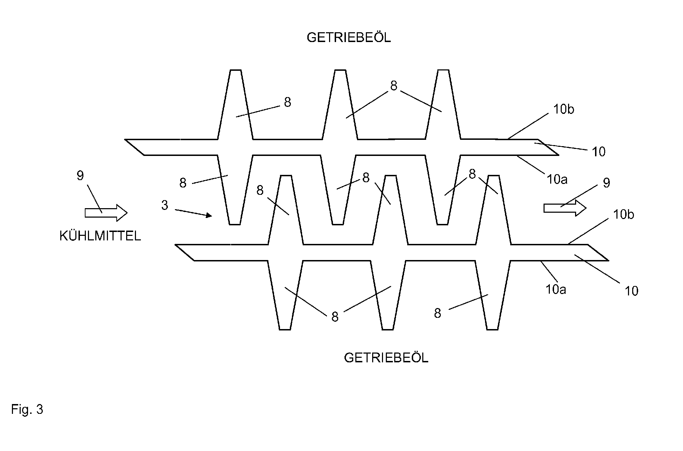

Figur 3 zeigt schematisch und im Querschnitt den Kühlmittelkanal 3 gemäß einer dritten Ausführungsform. Es sollen nur die Unterschiede zu der in Figur 2 dargestellten Ausführungsform erörtert werden, weshalb im Übrigen Bezug genommen wird auf Figur 2. Für dieselben Bauteile wurden dieselben Bezugszeichen verwendet.

Bei den beiden sich gegenüberliegenden Wandungen 10 des Kühlmittelkanals 3, an denen Rippen 8 vorgesehen sind, handelt es sich jeweils um eine das Kühlmittel und das Getriebeöl voneinander trennende Wandung. Auf der kühlmittelzugewandten Seite 10b jeder trennenden Wandung 10 durchströmt das Kühlmittel den Kühlmittelkanal 3, wohingegen sich auf der anderen Seite 10a der Wandung 10 jeweils Getriebeöl befindet.

Jede der beiden trennenden Wandungen 10 weist zusätzliche Rippen 8 auf, die auf der dem Getriebeöl zugewandten Seite 10a der trennenden Wandung 10 angeordnet sind.

### Bezugszeichen

- 1: Getriebegehäuse
- 2: Kühlmittelmantel
- 3: Kühlmittelkanal
- 4: Zuführung
- 5: Abführung
- 6: Deckel
- 7a: Dichtfläche
- 7b: Dichtfläche
- 8: Rippe
- 9: Hauptströmungsrichtung
- 10: trennende Wandung
- 10a: getriebeölzugewandte Seite der trennenden Wandung
- 10b: kühlmittelzugewandte Seite der trennenden Wandung

## Patentansprüche

1. Getriebe mit Getriebegehäuse (1), insbesondere für die Verwendung mit einer Brennkraftmaschine, **dadurch gekennzeichnet, dass** das Getriebegehäuse (1) mindestens einen Kühlmittelmantel (2) zur Beeinflussung der Getriebeöltemperatur als Bestandteil einer Flüssigkeitskühlung aufweist mit mindestens einem Kühlmittel durch das Getriebegehäuse (1) führenden Kühlmittelkanal (3), mindestens einer Zuführung (4) zur Versorgung des mindestens einen Kühlmittelmantels (2) mit Kühlmittel und mindestens einer Abführung (5) zum Abführen des Kühlmittels.

2. Getriebe nach Anspruch 1, **dadurch gekennzeichnet, dass** der mindestens eine Kühlmittelmantel (2) mit einer Flüssigkeitskühlung der Brennkraftmaschine verbunden ist.

3. Getriebe nach Anspruch 1 oder 2, **dadurch gekennzeichnet, dass** der mindestens eine Kühlmittelkanal (3) mindestens eine Rippe (8) aufweist, die in den Kühlmittelkanal (3) hineinragt.

4. Getriebe nach Anspruch 3, **dadurch gekennzeichnet, dass** die mindestens eine Rippe (8) quer zur Hauptströmungsrichtung (9) des Kühlmittels ausgerichtet ist.

5. Getriebe nach Anspruch 3 oder 4, **dadurch gekennzeichnet, dass** die mindestens eine Rippe (8) an einer das Kühlmittel und das Getriebeöl trennenden Wandung (10) des mindestens einen Kühlmittelkanals (3) angeordnet ist.

6. Getriebe nach einem der vorherigen Ansprüche, **dadurch gekennzeichnet, dass** an mindestens einer das Kühlmittel und das Getriebeöl trennenden Wandung (10) des mindestens einen Kühlmittelkanals (3) mindestens eine Rippe (8) auf der dem Getriebeöl zugewandten Seite der trennenden Wandung (10) angeordnet ist.

7. Getriebe nach einem der vorherigen Ansprüche, **dadurch gekennzeichnet, dass** der mindestens eine Kühlmittelkanal (3) mindestens zwei Rippen (8) aufweist, die in den Kühlmittelkanal (3) hineinragen und auf gegenüberliegenden Seiten des mindestens einen Kühlmittelkanals (3) angeordnet sind.

8. Getriebe nach Anspruch 7, **dadurch gekennzeichnet, dass** die auf gegenüberliegenden Seiten des mindestens einen Kühlmittelkanals (3) angeordneten Rippen (8) versetzt zueinander angeordnet sind.

9. Getriebe nach Anspruch 8, **dadurch gekennzeichnet, dass** die auf gegenüberliegenden Seiten des mindestens einen Kühlmittelkanals (3) angeordneten und in den Kühlmittelkanal (3) hineinragenden Rippen (8) entlang des Kühlmittelkanals (3) überlappend ausgebildet sind.

10. Verfahren zur Beeinflussung der Getriebeöltemperatur eines mit einer Brennkraftmaschine zusammenwirkenden Getriebes nach einem der vorherigen Ansprüche, **dadurch gekennzeichnet, dass** der mindestens eine Kühlmittelmantel (2) mit einer Flüssigkeitskühlung der Brennkraftmaschine verbunden wird und in der mindestens einen Zuführung (4) ein Absperrelement zur Steuerung des Zuflusses an Kühlmittel vorgesehen wird, wobei das Absperrelement in Abhängigkeit von der Temperatur einer Betriebsflüssigkeit betätigt wird.

11. Verfahren nach Anspruch 10, **dadurch gekennzeichnet, dass** ein Sensor zur Erfassung der Getriebeöltemperatur vorgesehen wird und das Absperrelement in Abhängigkeit von der Temperatur des als Betriebsflüssigkeit dienenden Getriebeöls betätigt wird.

12. Verfahren nach Anspruch 10, **dadurch gekennzeichnet, dass** ein Sensor zur Erfassung der Motoröltemperatur vorgesehen wird und das Absperrelement in Abhängigkeit von der Temperatur des als Betriebsflüssigkeit dienenden Motorenöls betätigt wird.

13. Verfahren nach Anspruch 10, **dadurch gekennzeichnet, dass** ein Sensor zur Erfassung der Motorkühlmitteltemperatur vorgesehen wird und das Absperrelement in Abhängigkeit von der Temperatur des als Betriebsflüssigkeit dienenden Motorkühlmittels betätigt wird.
